# EUROPEAN PATENT APPLICATION

(11) **EP 4 545 167 A1**
(43) Date of publication of application: **30.04.2025**
(21) Application number: 23206500.3
(22) Date of filing: 27.10.2023
(51) Int. Cl.: B01D 53/04, B01D 53/26

(54) **PROCESS AND APPARATUS FOR DRYING A SORBENT**

(71) Applicant: Hif Emea GmbH, 10758 Berlin (DE)
(72) Inventor: Schumacher, Rolf, 14059 Berlin (DE); Tremel, Alexander, 91096 Möhrendorf (DE)
(74) Representative: WBH Wachenhausen Patentanwälte PartG mbB

(57) **Abstract**

The present invention relates to a process for drying a sorbent, comprising the steps of desorbing (IX) a substance (2), preferably water, from the sorbent (3), increasing (X) the pressure of the substance (2) desorbed from the sorbent (3), at least partially condensing (XI) the substance (2) having the increased pressure, and transferring (XII) heat released by the condensation of the substance (2) to the sorbent (3). The present invention further relates to an apparatus (1) for desorbing a substance (2), preferably water, from a sorbent (3), comprising a sorbent (3), a pressure increasing device (11) and a heat transfer device (9). The apparatus (1) is arranged and configured to increase the pressure of the substance (2) desorbed from the sorbent (3) with the pressure increasing device (11), to at least partially condense the substance (2) having the increased pressure, and to transfer heat released by the condensation of the substance (2) with the heat transfer device (9) to the sorbent (3).

## Description

### Technical Field

The present invention relates to a process and an apparatus for drying a sorbent.

### Background

In the state of the art, processes and apparatuses for drying a sorbent are known. The European patent application EP 0 484 121 A1 relates to such an apparatus, in which a heated gas is used to remove water adsorbed by a rotor of a dehumidification apparatus, for example.

### Summary of the invention

The present invention relates to a process for drying a sorbent, comprising the steps of desorbing a substance, preferably water, from the sorbent, increasing the pressure of the substance desorbed from the sorbent, at least partially condensing the substance having the increased pressure, and transferring heat released by the condensation of the substance to the sorbent. A sorbent may be a component that is able to sorb another substance, in particular by absorption and/or absorption. Preferably the sorbent is an adsorbing substance, meaning that it is a substance able to adsorb, i.e. collect another substance at its surface. Preferably, the sorbent is configured to adsorb water. In particular, it may be configured to be able to adsorb more than 10%, preferably more than 20%, even more preferably more than 30% of its mass in water.

Drying the sorbent can mean to remove, e.g. desorb the sorbed substance from the sorbent, particularly to remove and/or desorb water. This can be accomplished by heating the sorbent, by reducing the ambient pressure of the sorbent, by reducing the ambient humidity of the gas in contact with the sorbent and/or by chemical, mechanical, electric and/or electronic means. To desorb the substance from the sorbent, it is necessary to overcome an energy barrier, in particular an absorption and/or an adsorption enthalpy. The removal of the substance from the sorbent may comprise an evaporation of the substance. Therefore, it may additionally be necessary to overcome an evaporation enthalpy of the sorbed substance; for example, it may be necessary to overcome an evaporation enthalpy of water to remove water from the sorbent. This may be accomplished through the aforementioned means, and preferably accomplished by the supply of heat. It may also be possible to remove a substance from the sorbent without evaporating it. In this case it may not be necessary to overcome an evaporation enthalpy and it may be sufficient to overcome an adsorption and/or absorption enthalpy for effective removal.

In the further step of increasing the pressure of the substance desorbed from the sorbent, the substance may be compressed and/or it may be introduced into an environment with a higher pressure. In one embodiment of the invention, in which the substance is water, specifically water vapor, the substance is compressed when its pressure is increased. Its temperature may also rise during this process due to the compression and increase of pressure. It may also increase due to work done on the fluid, wherein work refers to the thermodynamic process. The process further comprises the step of at least partially condensing the substance having the increased pressure. Such a condensation may occur due to the thermodynamic condition of the substance, which may be present in a liquid and/or in a gaseous phase depending on its pressure and temperature.

When it condenses, the substance releases heat which is equivalent to its condensation enthalpy. In the present invention, at least a part of the heat released by the condensation of the substance is transferred to the sorbent. In particular, the heat may be transferred to the sorbent through the use of a heat transfer device. In particular, the heat may be transferred to the sorbent mainly via conduction and/or convection, for example by flowing the substance through the heat transfer device, which may be in contact with the sorbent. In the context of the present invention, to transfer heat can be defined as conveying a thermal energy from one location to another, preferably by conduction and/or convection, in an amount sufficient to cause an increase in temperature measurable via commonly available means, such as via a thermometer. For example, to transfer heat from one component to the other component may mean to conduct and/or convect an amount of heat sufficient to cause an increase in temperature of at least 0.1 °C, preferably of at least 1°C, of the other component. In a preferred embodiment of the invention, at least 20% of the heat released by the condensation may be transferred to the sorbent. More preferably, the heat transferred to the sorbent may be at least 30%, 40%, 50%, 60%, 70%, 80%, 90%, or 95% of the heat released by the condensation. The heat transferred to the sorbent in this way may be sufficient to desorb further substance from the sorbent. The pressure of the further desorbed substance is then increased, the further substance is at least partially condensed, and the heat released by the condensation of the further desorbed substance is transferred back to the sorbent. A continuous process may be provided, in which an energy required for desorption and evaporation is provided at least partly by the condensation of the desorbed substance.

The present invention allows for a particularly efficient desorption of a substance from a sorbent. By directing the energy released by the condensation of the substance to the sorbent, this energy can be reused to cause a further desorption and evaporation. The evaporation of a substance, in particular the evaporation of water, can require overcoming a large evaporation and desorption enthalpy. By compressing the evaporated substance, at least a part of the energy used for evaporation can be recovered and reused for a further desorption and drying process. Such a process may be particularly energy efficient, may also provide a particularly low environmental impact and be particularly cheap to perform.

In an embodiment of the present invention, the process further comprises a step of adding additional heat to the sorbent, the combined energy of the additional heat and the transferred heat being sufficient to overcome a desorption enthalpy of the substance. The heat may also be suitable for adjusting the temperature and/or pressure level in a container described below, in which the sorbent may be accommodated and which may be closed against the environment. The heat may be added to the sorbent through the use of the aforementioned heat transfer device. In an embodiment of the invention, the additional heat may be added to the sorbent through a heat provision means, which may be configured as described in detail further below. The additional heat may be sufficient to cause at least a partial desorption of the substance from the sorbent. The additional heat may also be sufficient to cause a desorption and evaporation of the substance from the sorbent, either by itself or together with the heat released by the condensation of the substance. The additional heat may comprise waste heat from another process. The energy required to desorb and evaporate the substance from the sorbent may be larger than the condensation energy released by the condensation. Therefore, providing additional heat overcomes this difference in energy, enabling an effective and efficient drying process of the sorbent. Additionally, particularly energy efficient sources for the additional heating energy may be used, such as a heat pump and/or waste heat from a different process, further improving the efficiency of the process as well as reducing its environmental impact.

In an embodiment of the present invention, the sorbent is accommodated in a container and the process further comprises a step of closing the container against the environment. The container may be configured to allow a gas to enter and exit it in an open state, and to not allow this in the closed state. In the closed state, a fluid may still be circulated within the system, e.g. removed from the container, but no fluid from the environment is introduced into the container. The container is described in further detail below. The process may further comprise a step of applying a vacuum to the container. The vacuum may be applied through use of a vacuum pump. The gas removed or evacuated from the container may be stored in an additional container, may be reused in a separate process and/or may be released to the environment. By applying the vacuum, a gas, in particular air, may be removed from the inside of the container. The step of applying a vacuum may comprise removing gas until a pressure of equal or lower than 100 kPa is reached inside the container, preferably until a pressure of equal or lower than 50 kPa is reached, more preferably until a pressure of equal or lower than 10 kPa is reached. The vacuum pump may be configured to provide the aforementioned pressures. By applying a vacuum, the pressure in the container is reduced, enabling or improving a desorption process from the sorbent. Additionally, by removing the gas from the container, the process of increasing the pressure of and condensing the substance desorbed from the sorbent may be rendered more efficient or effective, as the further gas inside the container does not have to be compressed or increased in pressure. Applying a vacuum to the container therefore enables both a more efficient use of energy, and a more effective desorption process.

In an embodiment of the present invention, the process further comprises a step of feeding a gas to the container carrying the substance, and a step of adsorbing the substance with the sorbent. Feeding a gas to the container may comprise passing it through an opening or entry of the container. It may also comprise passing it through a valve regulating the entry of gas into the container. Feeding the gas into the container may comprise passing the gas through a fan, pump, compressor and/or further device to supply it into the container. The gas may comprise ambient air, treated air and/or another gas. The gas is carrying the substance, which may be in a liquid and/or in a gaseous phase. In particular, the substance may be water, and may be present as humidity in ambient air fed into the container. The gas may come into contact with the sorbent when entering the container, whereby the substance carried by the gas may be adsorbed by the sorbent. When the substance is adsorbed, it releases energy, heating up the sorbent. Feeding the gas to the container may also comprise letting it exit the container. Preferably, the exiting gas contains less substance, e.g. less water, than the gas entering the container. The exiting gas may be warmer than the entering gas, as the adsorption process may release heat.

By providing an adsorption step, the present invention allows for a cyclical operation of a sorbent. For example, the present invention allows for drying a gas stream, for example ambient air, for various applications. The applications may comprise, for example, providing air for a building, in particular air-conditioned air. It may also comprise providing air or gas for industrial, technical, or other uses. By providing both an adsorption and a desorption step, the process provides a particularly efficient method of using sorbent material. The adsorption and the desorption phases may be conducted sequentially after each other. In other words, in a single container, the adsorption and the desorption phases may be not conducted in parallel to each other, i.e. at the same time. However, in an embodiment of the invention, multiple containers may be provided and while the adsorption and desorption phases may not be conducted in parallel to each other in a single container, the adsorption and/or the desorption phases may be conducted in parallel to each other in two or more of the multiple containers. Additionally, the process is particularly well suited for drying an ambient air at low temperatures or to achieve a particularly low residual humidity. Processes relying on condensation for drying a gas flow may incur in freezing of certain components as low temperatures are encountered. As the process does not rely on condensation for extracting the substance form the gas flow, but instead on adsorption, this disadvantage is avoided. Thus, a high range of operating temperatures and humidities may be achieved. In one embodiment, the process is used to provide dry air for a tumble dryer and/or dishwasher. The provided process may further be used for providing dry air, particularly for an industrial process. Preferably, it may also provide a drying means for a further process of extracting a gas from the dried air, such as CO₂, Nitrogen, Argon, Neon, Helium, Krypton, Xenon, Methane and/or others. This may in particular be used for a direct air capture process.

In an embodiment of the present invention, the process may further comprise a step of storing heat, preferably heat generated during an adsorption process, and a step of preheating the sorbent with the stored heat. During the process of adsorption, heat is released, heating up the sorbent, the substance, and/or the heat transfer device in contact with the sorbent. This heat may be stored via a heat storage device. The heat storage device may comprise a connection to a heat transfer device with which a heat-carrying medium may be exchanged. The medium, in particular a fluid and preferably a liquid, may be heated up by the heat released during the adsorption process by moving the medium along the heat transfer device. The heat storage device may comprise a compartment holding the heating medium. The medium may comprise a fluid such as water, steam, ammonia and/or another fluid configured for transferring heat. The heat stored in the heat storage device may be used in a subsequent process for preheating the sorbent. Preheating the sorbent may comprise adding heat to the sorbent, in particular increasing the temperature of the sorbent. This may be done by transferring the heated medium of the heat storage device to the heat transfer device, thereby heating up the sorbent. The heat storage device may further comprise a pump, which may be used for moving the aforementioned medium between the heat transfer device and the heat storage device. The heat storage device may also be provided by electric, electronic, chemical, mechanical and/or other means. For example, the sorbent may be preheated by heating an electric heating element arranged at the sorbent and/or at a conduit in contact with the sorbent.

By preheating the sorbent, a desorption process is rendered more effective and efficient. A minimum temperature may be necessary to desorb the substance, or the desorption speed may be proportional to the temperature. By preheating it and thereby raising the temperature, such a process is expedited and less energy has to be expended for later heating. By storing a heat released during an adsorption process and using the stored heat to preheat the sorbent, a particularly efficient process is achieved. This allows the reuse of energy released during one phase of the process to be reintroduced in another phase of the process. The heat released during an adsorption process may additionally have to be removed from the sorbent to allow for further adsorption at the sorbent, as high temperature may impede an adsorption process. Therefore, a combined advantage is achieved of enabling a more effective process, by cooling the sorbent in one process phase, while heating the sorbent in a different process phase. Additionally, the stored heat may be used for further purposes, such as heating a house and/or an industrial apparatus.

In an embodiment of the invention, the process may further comprise a step of controlling a temperature difference between a desorbed substance in the container and the condensed substance. The temperature difference may be controlled to be between 0°C and 100°C, preferably lower than 10°C. The temperature difference may be controlled in such a way that the sorbent may be colder than the condensed liquid. Particularly, the temperature difference may be controlled by controlling an operating pressure of the condensed substance. Additionally or alternatively, the temperature difference may also be controlled by controlling the provision of additional heat described above, such as by adding more or less additional heat, or through other means. The step of controlling the temperature difference may be achieved using an open loop or a closed loop control. By controlling a temperature difference between a desorbed substance in the container and the condensed substance, the desorption process may be better controlled and more predictable, as a known temperature may enable a more predictable and better controlled process. By controlling the temperature difference to be as low as possible, a particularly efficient thermodynamic process may be achieved.

In an embodiment of the invention, the process further comprises a step of supplying dry air to the sorbent for further drying of the sorbent. The dry air may be injected into the container accommodating the sorbent as described above, wherein the container may be in its closed state. The dry air may be provided from a parallel apparatus, which may be configured according to one of the embodiments as described below. Said parallel apparatus may be operated in its adsorption phase outputting dry air, wherein said dry air of the parallel apparatus may be supplied to the sorbent of the present apparatus for further drying of the sorbent and/or for utilizing the sensible heat of the sorbent and/or the surrounding material. In one embodiment, the process comprises a step of determining a degree of drying of the sorbent, e.g. a water load of the sorbent. In one embodiment, if the degree of drying of the sorbent is below a threshold, e.g. equal or below 15% of its mass in water, the pressure of the substance will no longer be increased, e.g. by stop operating a pressure increasing device as outlined below. Instead, the dry air may be supplied to sorbent for further drying the sorbent, which results in a temperature and humidity increase of the supplied air. Subsequently, the supplied air may be discharged. Due to the low humidity of the supplied dry air, the water vapor partial pressure within the container may decrease, which leads to an additional evaporation of water from the sorbent, thereby further decreasing the water load of the sorbent. The enthalpy required for the desorption at the sorbent and the heat up of the air results in a heat demand. Sensible heat stored within the sorbent and/or surrounding material may provide heat and reduce temperature variations. At the same time, the degree of drying of the sorbent is increased.

The present invention further relates to an apparatus for desorbing a substance, preferably water, from the sorbent, the apparatus optionally being configured to carry out the process according to one of the embodiments as described above. The apparatus comprises a sorbent, a pressure increasing device and a heat transfer device, wherein the apparatus is arranged and configured to increase the pressure of a substance desorbed from the sorbent with the pressure increasing device, and to at least partially condense the substance having the increased pressure. It is further configured to transfer heat released by the condensation of the substance with the heat transfer device to the sorbent. The apparatus may be an industrial apparatus, a part of an air conditioning apparatus, be used in a residential or commercial setting, or otherwise used to desorb a substance.

The pressure increasing device may be a compressor, a pump, or a further device used to increase the pressure of the substance. The heat transfer device is preferably a heat exchanger. The heat transfer device may preferably be in contact with the sorbent in such a way that heat conduction may take place. It may also be in contact with the heat transfer device in such a way that convection may take place to transfer heat. The pressure increasing device may be connected via conduits with the container and the heat transfer device, and preferably be arranged outside of the container. The conduits may comprise tubes or pipes, and the material of the conduits may comprise aluminum, copper and/or steel. The conduits may be insulated. The pressure increasing device may be configured in such a way as to take in the desorbed substance, preferably in a gaseous phase, from one side and expel it on the other side in an at least partially condensed state. The condensed substance may also be compressed. The sorbent may therefore be fluidly connected to the heat transfer device via the pressure increasing device. In particular, the sorbent may be fluidly connected to a heat exchanger through a compressor. These devices may be powered by electrical, mechanical and/or by other means. The compressor may have an efficiency between 60% and 100%, preferably between 80% and 100%, and more preferably between 80% and 90%.

In an embodiment of the present invention, the apparatus may further comprise a heat provision means configured to provide additional heat to the sorbent, the heat provision means preferably being configured as a steam provision means. The heat provision means may provide additional heat required to overcome a desorption enthalpy and/or evaporation enthalpy of the substance on the sorbent. The heat provision means may preferably be configured as a steam provision means. A steam provision means may provide heat through the use of steam, in particular by injecting it into a conduit connected to the heat transfer device. The steam may remain in a gaseous phase or condense when in the conduit or in the heat transfer device. The steam may be configured to heat up the sorbent, particularly through conduction and/or convection. The steam provided may also be utilized for regulating a temperature, a pressure and/or a further operating parameter in the container. The heat provision means may also be electric, electronic, chemical and/or provided by other means. For example, a heating coil may be provided in or at the heat transfer device, or in a conduit through which the condensed substance passes to heat it. The heat provision means may also provide heat through the use of hot water or a hot liquid flowing through the heat transfer device. The additional heat added to the sorbent may be added to the condensed substance, may be added directly to the heat transfer device and/or may be added directly to the sorbent. By providing the apparatus described above with a heat provision means, the apparatus may be configured to overcome a desorption enthalpy of the substance on the sorbent. Additionally, the apparatus may enable a particularly quick drying of the sorbent. By utilizing waste heat of a different process, the apparatus may further be configured to be particularly efficient.

In an embodiment of the present invention, the apparatus may further comprise a container configured to be opened and closed against the environment, wherein the sorbent is arranged within the container. In a preferred embodiment, the sorbent may be arranged at the bottom of the container. The sorbent may also be arranged at the top, at the sides of, or spread throughout the container. The sorbent may be arranged in a fixed position within the container or be movable within the container. The container may be hollow on the inside, providing space to accommodate the sorbent. The container may be configured to allow a passage of gas, in particular air, through it. It may have a tubular or cuboid shape. The material of the container may comprise a metal, such as aluminum, steel and/or copper, a polymer such as polycarbonate or others, a combination of both, or further materials. In particular, the container may be configured to be corrosion resistant, especially against water. The container may comprise at least two openings, one for allowing gas to enter and one for allowing gas to exit. The openings may be connected to conduits, such as tubes or pipes. The container may be arranged to be opened and closed against the environment through the use of valves. These may be actuated manually, electronically, mechanically and/or through other means. When the valves are closed, the container may be isolated from an outside environment. The environment may be an environment external to the apparatus, i.e., not including the environment within the heat transfer device, the pressure increasing device and/or further parts of the apparatus. The container may be gas tight against the environment, meaning that, when the container is in a closed state, no gas may enter.

In an embodiment of the present invention the apparatus may further comprise a vacuum pump configured to apply a vacuum to the container. The vacuum pump may be connected to the container by a conduit. The vacuum pump and the conduit may be configured to be gas tight and thereby not allow any gas to enter or exit through them when the vacuum pump is not in use. The vacuum pump may further be configured to be operable with a gas with a high humidity or water content. As previously described, applying a vacuum to the container via the use of a vacuum pump may provide a particularly efficient and effective process and apparatus.

In an embodiment of the present invention, the heat transfer device may comprise a first side being in physical contact with sorbent and a second side being in fluid connection with the sorbent via the pressure increasing device. The heat transfer device may comprise a heating conduit and/or a heat exchanger. The heat transfer device may comprise a plurality of heating conduits and may be configured to provide a large surface area to volume ratio. The first side of the heat transfer device may be a side of a conduit in physical contact with the sorbent, e.g. an outer surface of the conduit. The second side of the heat transfer device may be another side of the conduit, for example an inner surface. The heat transfer device may be configured to allow the efficient condensation of vapor and the output of a condensed liquid. It may further be configured to enable a heat transfer from the second side to the first side, and thereby to heat the sorbent through conduction and/or convection. The second side of the heat transfer device may be connected to the container via the pressure increasing device and may therefore be fluidly connected to the sorbent, e.g. via one or multiple conduits. The condensed substance may exit the apparatus through a further conduit after transferring heat through the heat transfer device.

In an embodiment of the present invention, the apparatus may further comprise a pressure adjustment means for adjusting an operating pressure of the condensed substance. The operating pressure of the condensed substance may be the pressure of the condensed substance within the heat transfer device or in a conduit connected to it. Preferably, the pressure adjustment means may be a valve configured to release the condensed substance and/or reduce a pressure down to ambient pressure. Alternatively or additionally, the pressure adjustment means may comprise a pump. The pump may be utilized for adjusting a pressure when it is below an ambient pressure. By enabling an adjustment of an operating pressure of the condensed substance, a control of a temperature difference and/or pressure difference from the condensed substance to a substance within the container may be achieved.

In an embodiment of the present invention, the sorbent may be provided as loose particles, as a coating and/or as a liquid, and/or comprise at least one of silica gel, silicon dioxide, zeolite and activated carbon. The sorbent may be provided as loose particles which are accumulated at the bottom of the container. These may be retained in a predefined position by retaining means, such as a net or a grating. The loose particles may in particular be accumulated around the heat transfer device, wherein at least some of them are in direct physical contact with the heat transfer device. The particles may have a geometry with a high surface to volume ratio. For example, they may have a high porosity. If the sorbent comprises a coating, it may be applied at least partially to the heat transfer device. The coating may additionally or alternatively also be applied to an inside surface of the container. The coating may be particularly porous and/or achieve a high surface to volume ratio. If the sorbent is provided as a liquid, it may be free to move within the container, and at least partially be in contact with the transfer device. The sorbent may further comprise at least one of silica gel, silicon dioxide, zeolite and activated carbon in any of these variants.

By providing the sorbent in one of the mentioned variants, an embodiment particularly suited for specific applications may be achieved. For example, an embodiment in which the sorbent is a coating may be used in an application in which space is a constraining factor, such as in a vehicle or in a building. Alternatively, the provision of multiple variants may allow a particularly simple construction of the apparatus depending on the available tools, material and expertise. The material composition of the sorbent may be selected depending on the substance to be ad- and desorbed, as well as depending on its concentration, amount, temperature, pressure, and other operating characteristics. The sorbent may additionally or alternatively be selected to enable a particularly efficient desorption process, for example by enabling a desorption of the substance at low temperatures.

In an embodiment of the present invention, the apparatus further comprises a liquid recovery device configured to recover the condensed substance. The liquid recovery device may comprise a container, for example a tank, a bucket and/or a vat, in which the condensed substance may be collected. The liquid recovery device may be configured to collect an already condensed liquid, or to condense or collect a gaseous substance as well. For example, it may comprise condensing elements for condensing the substance from a gaseous phase, or adsorbing elements. It may also be configured to collect a gaseous substance, for example in a tank. Additionally or alternatively, the liquid recovery device may also be configured to provide the recovered liquid to another process, for example for cooling. The recovered liquid may be water and may be provided as drinking water or other household functions. The liquid recovery device may be connected to a household water supply and redirect the recovered liquid into it. By providing a liquid recovery device, the apparatus provides a combined function of drying a gas stream and drying the sorbent within the apparatus, as well as extracting the adsorbed substance. For example, the apparatus may be provided as part of an air conditioning means, in which air is dried and the extracted air provided to a user. Such a system may be particularly efficient and have a low environmental impact, as the water removed during the air conditioning process may be reused.

In an embodiment of the present invention the apparatus may further comprise a control device configured, i.e. specifically adapted, e.g. programmed, to control the apparatus to carry out the process of one the embodiments described above. The control device may be a computer, which may comprise a processor or a microprocessor, and a storage device. It may further comprise communication means with sensors and actuators of the device, particularly electronic means. It may be connected to temperature, pressure, or humidity sensors. The control device may communicate with, comprise, or be part of a thermostat or air conditioning control device. The control device may be configured to perform the described process when certain environmental conditions are detected, such as a humidity higher than a threshold, or when a certain temperature is detected. The control device may further be configured to perform the described process when activated, or a signal to do so is received. By providing a control device to control the described apparatus, a particularly efficient operation may be achieved. The control device may be configured to operate the device at optimal conditions, where optimal conditions may be predetermined or calculated during operation and may provide a low energy expenditure. The control device may further enable a user to monitor the functioning of the device, or to activate and deactivate the apparatus.

### Brief description of the figures

Fig. 1 is a schematic illustration of an apparatus for desorbing water from a sorbent according to one embodiment of the present invention.
Fig. 2 shows a flowchart of a method for desorbing a substance from a sorbent with the apparatus of Fig. 1 according to an embodiment of the present invention.

### Detailed description of the figures

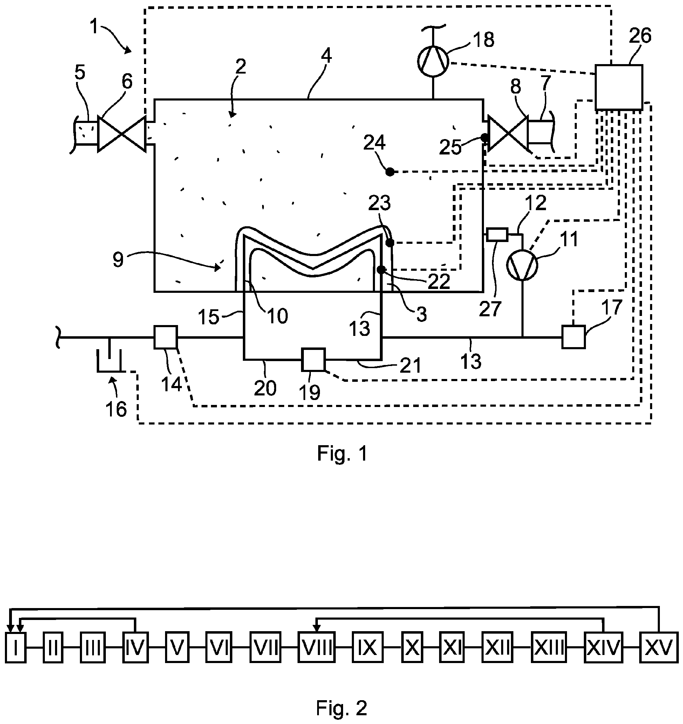

Fig. 1 is a schematic illustration of an apparatus 1 for desorbing a substance 2 from a sorbent 3 according to an embodiment of the present invention. In the embodiment illustrated in Fig. 1, the substance 2 is water. The apparatus 1 comprises a container 4 which comprises an input conduit 5 with an input valve 6, and an output conduit 7 with an output valve 8. The input and output conduits 5 and 7 are configured to respectively transport a fluid, e.g., a gas containing water, into and out of the container 4. The input conduit 5 and the output conduit 7 are approximately at the same heights in the present embodiment but may also be arranged on different heights. The container 4 can be closed against the environment by closing the input valve 6 and the output valve 8. The container 4 is configured to be gas tight when the valves 6 and 8 are closed, except for an opening connected to a tubing 12 described below. The gas entering the container 4 may contain water in liquid and/or in gaseous form, while the gas exiting the container 4 may contain less or no water. This is illustrated by a reduced density of particles representing the substance 2 at the side of the output conduit 7 in Fig. 1. The sorbent 3 is arranged within the container 4, in the present embodiment below the input conduit 5 and the output conduit 7.

Furthermore, the apparatus 1 contains a heat transfer device 9, which is configured as a heat exchanger in the present embodiment. The heat transfer device 9 is arranged within and at the bottom of the container 4 and comprises a heating conduit 10. In the present embodiment, the sorbent 3 is formed as a coating on the heat transfer device 9, namely the heating conduit 10 of the heat transfer device 9. In a different embodiment, the sorbent 3 is provided as a particle filling and/or a fluid in which the heat transfer device 9 is immersed. The heat transfer device 9 has a first side and a second side, wherein the first side is in physical contact with the sorbent 3 to allow for a heat transfer between the heat transfer device 9 and the sorbent 3 by conduction. In the present embodiment, the sorbent 3 is provided as a coating on the first side of the heat transfer device 9. The second side of the heat transfer device 9 is forming the heating conduit 10 of the heat transfer device 9. In the present embodiment the heat exchanger 9 may comprise aluminum.

In addition, the apparatus 1 comprises a pressure increasing device 11, which is configured as a compressor in the present embodiment. An input side of the pressure increasing device 11 is connected to the container 4 via the tubing 12 and the opening described above, in the present embodiment at a position below the output conduit 7. In the present embodiment, said connection of the input side of the pressure increasing device 11 to the container 4 takes place via a droplet separator and/or separator drum 27 to avoid liquid entering the compressor 11. An output side of the pressure increasing device 11 is connected to an input of the heat transfer device 9, in the present embodiment to an input of the heating conduit 10 of the heat transfer device 9, via a tubing 13. Therefore, the first side of the heat transfer device 9 is in physical contact with the sorbent 3 and the second side of the heat transfer device 9 is in fluid connection with the sorbent 3 via the tubings 12 and 13 and the pressure increasing device 11. An output of the heat transfer device 9 is connected to a pressure adjustment means 14 via a tubing 15. In the present embodiment, the material of the tubings 12, 13 and 15 may comprise aluminum and/or steel. In the present embodiment, the pressure adjustment means 14 is configured as a pressure relief means, which is configured to reduce a pressure of the fluid in the tubing 15 down to atmospheric pressure. The apparatus 1 further comprises a liquid recovery device 16, which is connected to an output of the pressure adjustment means 15 and is therefore arranged behind the pressure adjustment means 15 as seen from a flow direction of the fluid through the heat transfer device 9.

The apparatus 1 further comprises a heat provision means, which in the present embodiment is configured as a steam provision means 17. The steam provision means 17 is connected to tubing 13 in the present embodiment. The steam provision means 17 is configured to inject steam into tubing 13 to add heat to the apparatus 1. The amount of steam provided by the steam provision means 17 is controllable via a valve that is not shown in Fig. 1.

The apparatus 1 is configured to compress water vapor of the container 4 with the pressure increasing device 11 to a higher pressure, to condense the compressed water vapor in tubing 13 and the heat transfer device 9, namely the heating conduit 10, and to recover the water via tubing 15 and the pressure adjustment device 14 with the liquid recovery device 16. The apparatus 1 is further configured to control a temperature difference between the temperature of the sorbent 3/the temperature (and pressure) of the desorbed fluid within the container 4, and the fluid within the heating conduit 10 via the pressure adjustment means 14. The apparatus 1 is also configured to adjust a volumetric flow rate via the pressure increasing device 11. The apparatus 1 is further configured to control a temperature and/or a pressure within the container 4 via the steam provision means 17. By increasing/decreasing the amount of injected steam to adjust the amount of heat added to the apparatus 1, the temperature and/or pressure within the container 4 may be adjusted to maintain the optimum temperature difference between the sorbent, the desorbed fluid and the heating fluid in the heat transfer device 9. In the present embodiment, the apparatus 1 is configured to conduct all of the above steps with the container 4 being closed against the environment. The different parameters, e.g. the temperature difference, the volumetric flow rate and/or the temperature/pressure within the container, may also be controlled by a different device than the one described above or by a combination of multiple of the devices described above.

The apparatus 1 further comprises a vacuum pump 18, which is configured to remove a gas, in particular ambient air, from the container 4 to thereby apply a vacuum. The vacuum pump 18 is arranged at the top of the container 4 in Fig. 1, but can be arranged at other positions as well, for example below or to the side of the container 4. In addition, the apparatus 1 comprises a heat storing means 19, which is connected on one side to the tubing 13 via a storage tubing 21 and connected on another side to the tubing 15 via a further storage tubing 20. The material of the tubings 20 and 21 may comprise aluminum and/or steel. The tubing 13 and the tubing 15 are therefore fluidly connected via the heat storing means 19 in the embodiment shown in Fig. 1. Different arrangements and connecting points are also possible. The heat storing means 19 is configured to store heat from the heat transfer device 9 and to reintroduce said heat to the heat transfer device 9 at a later point in time. In the present embodiment, the heat storing means 19 is configured to store heat by circulating a liquid through the heating conduit 10, said liquid being heated in the heat transfer device 9 and being subsequently stored in the heat storing means 19. To release the stored heat, the heated liquid is circulated through the heat transfer device 9 for heating the same. In one embodiment, multiple apparatuses according to the present embodiment are provided. Some or all of these multiple apparatuses may be connected to a single heat storing means 19, which may be configured as described above. In alternative embodiment, a heat transfer fluid is provided, which is configured for conducting a phase change in order to improve the heat transfer efficiency and/or velocity, the heat transfer fluid being water, for example.

Additionally, the apparatus 1 comprises a conduit temperature sensor 22, a sorbent temperature sensor 23, a container sensor 24 and a humidity sensor 25. The conduit temperature sensor 22 is arranged within the heating conduit 10 to determine a temperature of a fluid within the heating conduit 10, and the sorbent temperature sensor 23 is arranged at the sorbent 3 to determine a temperature of the sorbent 3. The temperature sensors 22 and 23 are configured to read a temperature and transmit it to a control device 26. The container sensor 24 is arranged inside the container 4 and is configured to read a temperature and/or a pressure and to transmit it to the control device 26. The humidity sensor 25 is arranged within the output conduit 7 and is configured to measure the humidity of the gas exiting the container 4. The humidity sensor 25 can also be arranged in other locations and may additionally measure the humidity of the gas entering the container 4.

The control device 26 is configured to control the apparatus 1. The control device 26 is connected to the input and the output valves 6 and 8, the pressure increasing device 11, the pressure adjustment means 14, and the liquid recovery device 16. It is also connected to the steam provision means 17, the vacuum pump 18, the heat storing means 19, the temperature sensors 22 and 23, the container sensor 24 and the humidity sensor 25. The control device 26 is configured to receive information from the temperature sensors 22 and 23, the container sensor 26, and the humidity sensor 25 and to control the other elements based at least on that information. The control device 26 is configured to control the apparatus 1 to perform a process of desorbing and adsorbing water, as will be explained in detail in relation to Fig. 2.

Fig. 2. shows a flowchart of a method for desorbing a substance from a sorbent 3 with the apparatus 1 of Fig. 1 according to an embodiment of the present invention. In a first step of feeding I a gas into the container 4, the input valve 6 and the output valve 8 are opened, allowing the gas to enter container 4 via input conduit 5 and to exit it via output conduit 7. The gas entering through input conduit 5 and input valve 6 into container 4 contains water. The water can be present in a gaseous phase, in a liquid phase, or both. The gas therefore has a humidity above 0. In the present embodiment, a blower (not shown) is provided to supply the gas into the container 4. Inside the container 4 the gas is guided along the sorbent 3, which adsorbs water of the gas in step II to decrease the absolute gas humidity. The gas then exits through the output conduit 7 and the output vale 8 having a lower humidity than when it entered the container 4. During the step of adsorbing II, heat is released, heating up the sorbent 3 and the heat transfer device 9. The heat released by this is optionally transported away from the sorbent 3 through the heat transfer device 9 and stored in a step III in the heat storing means 19. In the embodiment shown in Fig. 1, this is accomplished by continuously circulating a fluid of the heat storing means 19 through the heating conduit 10, as described above. As described above, the heat transfer fluid may be configured for conducting a phase change.

The sorbent 3 is configured to adsorb a certain amount of water. For example, it can be configured to absorb more than 30 % of water by mass. This means that, if the sorbent 3 has a mass of 5000 kg, it can be configured to absorb up to 1500 kg of water. When the sorbent 3 has reached a predefined maximum amount of water, for example if it is saturated, the step of adsorbing II is terminated. The operating conditions of the apparatus 1 are continuously monitored in a step IV during adsorption, in particular by the control device 26 through the humidity sensor 25. The humidity sensor 25 can be configured to compare the humidity of the incoming and outgoing gas, whereby the control device 26 is able to monitor IV the humidity and determine that the sorbent 3 is saturated when the difference between the two values falls below a threshold. The humidity sensor 25 can also be configured to measure an absolute humidity, whereby the control device 26 is configured to determine that the sorbent 3 is saturated when the outgoing humidity exceeds a certain threshold. Alternatively, the control device 26 may be configured to determine that the sorbent 3 is saturated when the outgoing humidity rises over time as the sorbent 3 is unable to adsorb more water 2. Further configurations using additional or alternative sensors and conditions are also possible.

When the control device 26 has determined that the sorbent 3 is saturated or has adsorbed a determined amount of water, or when an adsorption process is otherwise terminated, the input valve 6 and the output valve 8 are closed in a step V, isolating the container 4 from the gas flow and the environment as described above. Likewise, the operation of the heat storing means 19 is terminated. The vacuum pump 18 is then controlled in a subsequent step VI to apply a vacuum to the container 4. Additionally, the heat storing means 19 are controlled to preheat VII the heating conduit 10 and thereby the heat transfer device 9 by feeding at least some of the previously stored heat back to the heat transfer device 9. In the present embodiment, this may be accomplished by moving the previously stored liquid from the heat storing means 19 to the heating conduit 10 via storage tubing 21 and tubing 13. The steam provision means 17 are also controlled to add in a step VIII an additional heat to the heating conduit 10 via the tubing 13. This additional heat provided by the steam is added to the sorbent 3 via the heat transfer device 9 to cause evaporation of desorbed water for drying the sorbent 3. The heat added to the sorbent 3 via the heat transfer device 9 in the steps of preheating VII and adding of steam VIII, in addition to the pressure change due to applying VI a vacuum, is sufficient to cause water on the sorbent 3 to at least partially desorb in a step IX.

In a further step, the pressure increasing device 11 is controlled to increase X the pressure of the water desorbed from the sorbent 3, which is present in the form of water vapor. In the present embodiment, the desorbed water is moved from the container 4 into tubing 13 via the tubing 12 and the pressure increasing device 11. This water vapor, together with the added steam added in step VII, is condensed XI in the tubing 13 and the heating conduit 10 of the heat transfer device 9. This condensation results in the release of condensation heat. As the water is transported to the heating conduit 10, it transfers XII at least some of this condensation heat to the sorbent 3. This condensation heat heats up the sorbent 3 and lead to an additional desorption of water, which is then again condensed XI in the tubing 13 after increasing its pressure. Through use of such a cyclic process, the apparatus 1 achieves a particularly efficient desorption of water from the sorbent 3 by reusing the heat released during condensation to desorb and evaporate additional water. The control device 26 is configured to continue this process of desorption until the sorbent 3 has reached a desired amount of water content, for example 15% of water by weight. Additionally or alternatively, the control device 26 can also be configured to stop a process of desorption after a certain amount of time, after receiving a signal to do so, and/or depending on other conditions.

Additionally, the process may comprise a step of recovering XIII a liquid, which in the present embodiment is water. The step of recovering XIII the liquid may be performed during the desorption phase, after it, or at least partially during an adsorption phase as well. The step of recovering XIII comprises and extraction of liquid from tubing 15 via the liquid recovery device 16. In the present embodiment, the liquid recovery device 16 may be a container into which the condensed water flows after passing through the apparatus 1. It may also comprise a water recovery with different technical means, such as condensation, absorption, absorption, or other methods.

Once it has been determined that the sorbent 3 has reached a desired amount of water content, the control device 26 is configured to supply dry air to the sorbent 3 via a different input conduit (not shown) in a step XIV. The dry air is injected into the container 4 and leaves the container 4 with an increased temperature and an increased humidity via a different output conduit (not shown). This results in an additional drying of the sorbent 4.

During the desorption described above, the apparatus 1 and in particular the control device 26, are configured to control XV the operating conditions of the apparatus 1. In particular, the control device 26 is configured to control a temperature difference between the inside of the container 4, i.e., the temperature of the desorbed water, and the temperature of the heating fluid within the heating conduit 10. A control of this temperature difference is achieved by regulating the pressure within the heating conduit 10 through the pressure adjustment means 14. In an embodiment of the invention, the pressure adjustment means 14 can be provided by a valve, which can be opened to reduce a pressure up to an ambient pressure. A volumetric flow rate of the process is controlled by controlling the pressure increasing device 11. This may control a speed of the desorption process and/or a power consumption or other characteristics of the process. During the desorption process, the control device 26 may control the apparatus 1 to increase a pressure and a temperature within the container 4 by controlling the amount of steam added to the apparatus 1 via the steam provision means 17 to achieve a particularly effective and/or efficient desorption process.

In particular, the control device 26 is configured to control a temperature difference to be constant throughout the desorption process, and for example to be around 5°C during the process. The control device 26 may also be configured to control the vacuum pump 18 to reduce a pressure before the desorption process within the container 4. The amount of water adsorbed by the sorbent 3 may be a function of temperature and pressure. By controlling temperature and pressure within the container 4, and thereby of the sorbent 3, the process may be controlled to obtain a predefined amount of water content in the sorbent 3, and/or to desorb water from the sorbent 3.

As illustrated in Fig. 2, the steps described above may be performed in a cyclical or alternating manner, describing a process with an adsorption phase and a subsequent desorption phase. The adsorption phase comprises the steps of feeding I, absorbing II, storing III, and monitoring IV, which are performed continuously or cyclically. After an adsorption phase, the steps of closing V, applying VI, and preheating VII may be performed to begin the desorption phase. The desorption phase comprises the steps of adding VIII, desorbing IX, increasing X, condensing XI, transferring XII, recovering XIII and supplying XIV. These steps may also be performed cyclically or continuously. After the desorption phase, the valves 6 and 8 may be opened again, going back to the adsorption phase as described above. During the whole process, the apparatus 1 is controlled by the control device 26. The process above has been described for the adsorption II and the desorption IX of water from the sorbent 3, however the process can also be performed analogously for other substances, such as liquid ammonia or other liquids.

### Reference signs

- 1: apparatus
- 2: substance
- 3: sorbent
- 4: container
- 5: input conduit
- 6: input valve
- 7: output conduit
- 8: output valve
- 9: heat transfer device
- 10: heating conduit
- 11: pressure increasing device
- 12, 13, 15: tubing
- 14: pressure adjustment means
- 16: liquid recovery device
- 17: steam provision means
- 18: vacuum pump
- 19: heat storing means
- 20, 21: storage tubing
- 22, 23: temperature sensor
- 24: container sensor
- 25: humidity sensor
- 26: control device
- 27: Droplet separator
- I: feeding air
- II: adsorb water
- III: storing heat
- IV: monitoring humidity
- V: closing valves
- VI: applying vacuum
- VII: preheating sorbent
- VIII: adding steam
- IX: desorbing water
- X: increasing pressure
- XI: condensing water vapor
- XII: transferring condensation heat
- XIII: recovering liquid
- XIV: supplying dry air
- XV: controlling apparatus

## Claims

1. A process for drying a sorbent (3), comprising the steps:
- desorbing (IX) a substance (2), preferably water, from the sorbent (3);
- increasing (X) the pressure of the substance (2) desorbed from the sorbent (3);
- at least partially condensing (XI) the substance (2) having the increased pressure; and
- transferring (XII) heat released by the condensation of the substance (2) to the sorbent (3).

2. The process according to claim 1, further comprising a step of adding (VIII) additional heat to the sorbent (3), the combined energy of the additional heat and the transferred heat being sufficient to overcome a desorption energy of the substance (2).

3. The process according to claim 1 or 2, wherein the sorbent (3) is accommodated in a container (4) and the process further comprises a step of closing (V) the container (4) against the environment, preferably further a step of applying (VI) a vacuum to the container (4).

4. The process according to claim 3, further comprising a step of feeding (I) a gas to the container (4) carrying the substance (2) and a step of adsorbing (II) the substance (2) with the sorbent (3).

5. The process according to claim 4, further comprising a step of storing (III) heat, preferably heat generated during an adsorption process, and a step of preheating (VII) the sorbent (3) with the stored heat.

6. The process according to one of the preceding claims 3 to 5, further comprising a step of controlling (XV) a temperature difference between a desorbed substance (2) in the container (4) and the condensed substance (2).

7. The process according to one of the preceding claims, further comprising a step of supplying (XIV) dry air to the sorbent (3) for further drying the sorbent (3).

8. An apparatus (1) for desorbing a substance (2), preferably water, from a sorbent (3), the apparatus (1) optionally being configured to carry out a process according to one of the preceding claims, comprising a sorbent (3), a pressure increasing device (11) and a heat transfer device (9), wherein the apparatus (1) is arranged and configured to increase the pressure of the substance (2) desorbed from the sorbent (3) with the pressure increasing device (11), to at least partially condense the substance (2) having the increased pressure, and to transfer heat released by the condensation of the substance (2) with the heat transfer device (9) to the sorbent (3).

9. The apparatus (1) according to claim 8, wherein the apparatus (1) further comprises a heat provision means (17) configured to provide additional heat to the sorbent (3), the heat provision means preferably being configured as steam provision means (17).

10. The apparatus (1) according to one of claims 8 to 9, wherein the apparatus (1) further comprises a container (4) configured to be opened and closed against the environment, wherein the sorbent (3) is arranged within the container (4).

11. The apparatus (1) according to claim 10, wherein the apparatus (1) further comprises a vacuum pump (18) configured to apply a vacuum to the container (4).

12. The apparatus (1) according to one of claims 8 to 11, wherein the heat transfer device (9) comprises a first side being in physical contact with the sorbent (3) and a second side being in fluid connection with the sorbent (3) via the pressure increasing device (11).

13. The apparatus (1) according to one of claims 8 to 12, wherein the apparatus (1) further comprises a pressure adjustment means (14) for adjusting an operating pressure of the condensed substrate (2).

14. The apparatus (1) according to one of claims 8 to 13, wherein the sorbent (3) is provided as loose particles, as a coating and/or as a liquid, and/or comprises at least one of silica gel, silicon dioxide, zeolite and activated carbon.

15. The apparatus (1) according to one of the claims 8 to 14, wherein the apparatus (1) further comprises a liquid recovery device (16) configured to recover the condensed substance (2).

16. The apparatus (1) according to one of claims 8 to 15, further comprising a control device (26) configured to control the apparatus (1) to carry out the process according to one of claims 1 to 7.
